# FASCICULE DE BREVET EUROPEEN

(11) **EP 1 807 188 B1**
(45) Date de publication et mention de la délivrance du brevet: **12.08.2009**
(21) Numéro de dépôt: 05811875.3
(22) Date de dépôt: 20.10.2005
(51) Int. Cl.: B01J 2/00

(54) **PRODUIT AMELIORE CAPABLE DE TRANSFORMER UN PRODUIT LIQUIDE TOXIQUE CORROSIF OU NUISIBLE POUR L"ENVIRONNEMENT EN RESIDU NON AGRESSIF OU NON NUISIBLE**
VERBESSERTES PRODUKT ZUR UMWANDLUNG EINES TOXISCHEN KORROSIVEN ODER UMWELTSCHÄDLICHEN FLÜSSIGEN PRODUKTS IN EINEN NICHT KORROSIVEN ODER UNSCHÄDLICHEN RÜCKSTAND
IMPROVED PRODUCT FOR TRANSFORMATION OF A TOXIC CORROSIVE OR ENVIRONMENTALLY-NOXIOUS LIQUID PRODUCT INTO A NON-CORROSIVE OR NON-NOXIOUS RESIDUE

(30) Priorité: 29.10.2004 FR 0411602
(43) Date de publication de la demande: 18.07.2007
(73) Titulaire: Meyer, Marie-Claude, 95760 Valmondois (FR)
(72) Inventeur: MEYER, Marie-Claude, Prevor International, F-95760 Valmondois (FR); MATHIEU, Laurence, F-33400 Talence (FR); GODARD, Céline, F-95800 Cergy Le Haut (FR)
(74) Mandataire: Pöpping, Barbara
(86) Numéro de dépôt international: PCT/FR2005/002609
(87) Numéro de publication internationale: WO 2006/048521

(56) Documents cités:
- EP-A- 0 995 492
- US-A- 5 342 543
- US-A- 5 641 496
- US-A- 5 766 312
- US-A- 5 846 836
- DATABASE WPI Week 199028 Derwent Publications Ltd., London, GB; AN 1990-214512 XP002421549 & JP 02 145679 A (MIYATA KOGYO KK) 5 juin 1990 (1990-06-05)
- DATABASE WPI Section Ch, Week 200108 Derwent Publications Ltd., London, GB; Class J01, AN 2001-062210 XP002332232 & CN 1 269 507 A (QINGDAO MARINE CHEM CO LTD) 11 octobre 2000 (2000-10-11)
- PATENT ABSTRACTS OF JAPAN vol. 007, no. 225 (C-189), 6 octobre 1983 (1983-10-06) & JP 58 119340 A (TEIKOKU KAKOU KK), 15 juillet 1983 (1983-07-15)

## Description

La présente invention porte sur un produit amélioré capable de transformer un produit liquide toxique corrosif ou nuisible pour l'environnement en résidu non agressif ou non nuisible.

De tels produits, encore appelés produits de neutralisation ont été décrits dans les brevets FR2784589 et EP995492. Bien que très efficaces, ils ne permettent pas de savoir si le produit toxique répandu est complètement neutralisé. L'utilisateur a donc tendance à augmenter les doses de produit de neutralisation de façon à s'assurer que le résidu peut être manipulé sans danger ou bien il doit réaliser une mesure du pH du résidu.

Il existe dans le commerce des produits de neutralisation des acides et des produits de neutralisation des bases qui sont dotés d'un indicateur coloré permettant une idenfication immédiate de la zone de pH du résidu.

Ces produits sont par exemple des produits commercialisés par la Société HALECO sous les marques Neutrabase^{®} et Neutracide^{®}.

Cependant, ces produits ont une action de neutralisation spécifique. Ils ne peuvent donc être utilisés que lorsque la nature du produit répandu est connue. Par ailleurs, pour le produit Neutrabase^{®} si la base à neutraliser est trop forte, l'indicateur coloré n'est plus fiable, ou bien il conserve la coloration basique alors que la neutralisation est achevée ou bien il ne remplit pas sa fonction, c'est à dire qu'aucun changement de couleur n'est détectable.

La fonction d'indicateur coloré du produit Neutracide^{®} est quant à elle annulée si l'acide à neutraliser est l'acide sulfurique à 98%.

Le choix d'un indicateur de pH pour des produits relativement simples tels que les produits de neutralisation monofonctionnel tels que Neutracide^{®} ou Neutrabase^{®} pose donc problème.

En outre, il est souvent difficile de connaître la nature du produit liquide qui s'est déversé, celui-ci étant rarement un produit pur mais plutôt un mélangé indéfini de produits toxiques ou nuisibles pour l'environnement.

Il existe donc un réel besoin en un produit multifonctionnel, c'est à dire permettant de neutraliser tant les acides que les bases, mais aussi les oxydants, les réducteurs, les huiles et/ou les graisses, doté d'un indicateur de pH.

Les présents inventeurs ont trouvé qu'un produit multifonctionnel, c'est-à-dire un produit tel que décrit dans les brevets FR2784589 et EP995492, auquel est ajouté un mélange spécifique de deux indicateurs colorés répondait à toutes ces exigences.

Ainsi, la présente invention porte sur un produit capable de transformer un produit liquide toxique, corrosif ou nuisible pour l'environnement en résidu non agressif ou non nuisible, qui comprend :
- au moins un amphotère choisi de telle sorte que :
   - le pH du résidu obtenu soit dans la plage de 5 à 10, de préférence de 5,5 à 9,7,
   - le plus petit des pK acides de l'amphotère soit dans la plage de 5 à 10, de préférence de 5,5 à 9,7, et le plus grand des pK basiques de l'amphotère soit choisi dans la plage de 5 à 10, de préférence de 5 à 8,
   - le plus grand des pK basiques de l'amphotère soit inférieur au plus petit des pK acides,
- au moins un absorbant lipophile ,
- au moins un absorbant hydrophile, et
- au moins un indicateur coloré binaire choisi dans le groupe constitué par les mélanges suivants bleu de Nil/rouge alizarine, jaune alizarine/rouge alizarine, thymolphtaléine/rouge de méthyle, phénolphtaléine/rouge de méthyle et tropaéoline OO/bleu de thymol,et
- éventuellement des additifs choisis dans le groupe comprenant des agents de charge, des agents de granulation, des agents antistatiques et leurs mélanges.

Dans la présente invention, on utilisera indifféremment les termes « mélange de deux indicateurs colorés » ou « indicateur coloré binaire » ou « indicateur coloré ».

Par "produit liquide" on entend tout produit ayant une consistance liquide, semi-liquide, semi-pâteuse ou pâteuse.

Selon un mode de réalisation avantageux de l'invention, l'indicateur coloré binaire est un mélange thymolphtaléine/rouge de méthyle, de préférence un mélange dans des proportions de 75/25 à 25/75, de préférence 50/50 p/p.

La quantité d'indicateur coloré dans le produit de l'invention doit être suffisante pour que les changements de coloration soient très visibles. Cependant, il est entendu que cette quantité est limitée par le coût élevé des colorants.

De façon appropriée, le produit conforme à l'invention comprend de 0,01% à 10% en poids d'indicateur coloré, de préférence de 0,05% à 5% et plus préférentiellement encore, de 0,01% à 0,5% en poids.

Selon un mode de réalisation avantageux de l'invention, le produit comprend au moins deux amphotères dans des proportions telles que le rapport de la somme du nombre de moles des amphotères ayant un pK acide dans la gamme de 5 à 10 et de préférence de 5,5 à 9,7, à la somme du nombre de moles des amphotères ayant un pK basique dans la gamme de 5 à 10, et de préférence de 5 à 8 soit compris entre 0,1 et 10.

On rappelle qu'un amphotère est une substance ou un ion qui peut jouer tantôt le rôle d'un acide et tantôt le rôle d'une base. Il présente donc au moins deux constantes de dissociation (pK), l'une correspondant à la fonction acide, l'autre à la fonction basique.

De façon plus précise, le produit de l'invention comprend, outre l'indicateur coloré :
- 20 à 60% en poids, de préférence 15 à 55%, et plus préférentiellement encore 10 à 45% en poids d'au moins un amphotère,
- de 2 à 20% en poids, de préférence de 2 à 15%, et plus préférentiellement encore de 1 à 10% en poids, d'au moins un absorbant lipophile,
- de 2 à 20% en poids, de préférence de 2 à 15%, et plus préférentiellement encore de 1 à 10% en poids, d'au moins un absorbant hydrophile,
- de 0 à 5% en poids, de préférence de 0,1 à 1% en poids d'additifs.

Dans la plupart des cas, on a recours à au moins deux amphotères différents, dont l'un présente un pK acide et l'autre présente un pk basique répondant aux exigences indiquées plus haut et qui seront appelés pour plus de commodité dans ce qui suit "amphotère anti-base" et "amphotère anti-acide" respectivement.

L'amphotère anti-base et l'amphotère anti-acide sont de préférence non conjugués, c'est-à-dire que l'un ne donne pas l'autre par une réaction acido-basique.

Comme amphotères anti-bases et amphotères anti-acides, on peut utiliser ceux décrits dans les brevets FR86 11754, FR86 11754, FR86 140042 au nom de la Demanderesse. En particulier, on peut utiliser les amphotères choisis dans le groupe comprenant : les acides aminés tels que la glycine, l'alanine, la sérine, la glutamine, la lysine, l'alanyl alanine, l'histidine, la L-histidyl-histidine, l'arginylarginine et leurs mélanges, le bicarbonate de sodium, l'édétate trisodique, le citrate disodique.

Le produit selon l'invention peut ne comporter qu'un seul amphotère, à condition qu'il présente d'une part un pK acide et d'autre part un pK basique répondant aux conditions précisées plus haut.

On peut citer en tant qu'amphotère de ce type la L-histidyl-histidine et l'arginylarginine.

L'absorbant lipophile est un produit absorbant ou superabsorbant, qui est un polymère tel que le polyisonorbornène, notamment celui commercialisé sous la dénomination NORSOREX APX1 de la Société ATOCHEM, ou bien encore les produits OIL ABSORBER de la Société SNF FLOERGER, GAMSORB de la Société GAMLEN INDUSTRIES SA, RHON'SEC granulé de la Société TOLSA FRANCE SA, et leurs mélanges.

L'absorbant hydrophile est choisi dans le groupe comprenant les absorbants ou superabsorbants, notamment les polymères acryliques tels que NORSOCRYL S35 de la Société ELF ATOCHEM et les produits vendus sous les dénominations AQUALIC^{®} LAW45 de la Société BASF, ASAP 2000 et ASAP 2003 de la Société CHEMDAL LTD., FAVOR Z1030 de la Société STOCKHAUSEN, DRYTECH 4535R de la Société DOW CHEMICALS, AQUASORB 3005K1 de la Société SNF FLOERGER, RHON'SEC granulé de la Société TOLSA FRANCE SA, et leurs mélanges.

Le produit conforme à l'invention est de couleur blanche à jaune pâle. Lorsque l'indicateur est un mélange thymolphtaléine/rouge de méthyle, ce produit devient bleu quand il est basique et rouge lorsqu'il est acide.

Le produit conforme à l'invention se présente sous la forme d'une poudre, de granules, de comprimés ou de produits conditionnés dans des emballages, notamment constitués de treillis en matière plastique ou en non tissé, de formes et dimensions appropriées de façon à obtenir par exemple dés plaques ou des boudins facilitant la mise en oeuvre du produit.

Pour la mise en oeuvre du produit selon l'invention, l'ajout d'une certaine quantité d'eau peut parfois être nécessaire. C'est le cas notamment lorsque le liquide répandu est un acide fort. En effet, celui-ci ne contenant que très peu d'eau, il peut s'avérer nécessaire d'en ajouter afin que la réaction de neutralisation soit complète.

Lorsque le produit selon l'invention est appliqué sur le liquide à traiter, il devient bleu si celui-ci est basique et rouge si celui-ci est acide (quand l'indicateur est thymolphtaléine/rouge de méthyle), il gonfle et se solidifie, il est alors blanc/jaune. On obtient alors un résidu solide plus ou moins compact selon la nature du liquide toxique, corrosif ou nuisible renversé. Ce résidu solide peut alors être facilement éliminé à l'aide par exemple d'une raclette, d'un balai, d'une pelle sans risque de brûlure ou d'irritation pour le manipulateur.

L'invention va maintenant être décrite plus en détail à l'aide des exemples non limitatifs suivants, qui sont donnés à titre purement illustratif.

### EXEMPLES

Dans les exemples les dénominations suivantes sont utilisées:
NORSOCRYL S35: absorbant lipophile commercialisé par la Société ATOCHEM.
NORSOREX APX1: absorbant hydrophile commercialisé par la Société ATOCHEM.

### EXEMPLE 1

### Utilisation d'un produit selon l'invention sur l'hydroxyde de potassium:

Le produit selon l'invention est une poudre blanche de composition suivante :
- 322 g de chlorure d'ammonium
- 393,4 g d' acide borique,
- 83,3 g de NORSOCRYL S35,
- 83,3 g de NORSOREX APX1,
- 200 mg de thymolphtaléine/rouge de méthyle (50/50).
   Sur une paillase on renverse 100ml d'hydroxyde de potassium (KOH) ayant la concentration indiquée dans le tableau 1 ci-dessous. On répand alors la poudre blanche dans les quantités indiquées dans le tableau 1, tout d'abord autour de la flaque puis sur toute sa surface.

La poudre se gonfle en devenant bleue et se solidifie puis, peu à peu le résidu formé perd sa couleur bleue et devient blanc cassé.
Une vérification du pH à l'aide d'un papier pH montre que le résidu est neutralisé, il présente un pH entre 5,5 et 9,7. Il peut donc être jeté sans crainte.

**Tableau 1**

| **Concentration de KOH (mol/l)** | **Quantité de poudre (g)** |
|---|---|
| 18 | 1020 |
| 12 | 685 |
| 6 | 330 |
| 1 | 65 |

### EXEMPTE 2:

### Détermination des indicateurs colorés utilisables

Les différents indicateurs suivants ont été choisis comme indicateur potentiellement utilisable pour le produit de l'invention.
colorant 1 : bleu de Nil / méthyl orange (50/50)
colorant 2 : fluorescéine
colorant 3 : fluorescéine sodée / thymolphtaléine (50/50)
colorant 4 : bleu de Nil / rouge alizarine (50/50)
colorant 5 : jaune alizarine / rouge alizarine (56/44)
colorant 6 : thymolphtaléine / tropaéoline OO (80/20)
colorant 7 : phénolphtaléine / tropaéoline OO (80/20)
colorant 8 : phénolphtaléine / rouge de méthyle (66/33
colorant 9 : phénolphtaléine / rouge de méthyle (80/20)
colorant 10 : rouge de méthyle /jaune d'alizarine (66/33)
colorant 11 : thymolphtaléine / rouge de méthyle (76/24)
colorant 12 : thymolphtaléine / rouge de méthyle (50/10)
colorant 13 : thymolphtaléine / rouge de méthyle (66/33)
colorant 14 : thymolphtaléine / rouge de méthyle (50/50)
colorant 15 : tropaéoline OO/bleu de thymol (66/33)
colorant 16 : tropaéoline OO/bleu de thymol (50/50)

Une première série de colorants seuls a été testée, les virages basique et acide ont été vérifiés. Les résultats sont donnés dans le tableau 2 ci-après :

**tableau 2**

| **colorant** | **HCl 1M** | **neutre** | **NaOH 1M** | **remarques** |
|---|---|---|---|---|
| 2 | jaune | | Vert-jaune | Couleur peu distincte pour milieu acide |
| 6 | Pourpre foncé | jaune | Pourpre foncé-bleu | Pas de virage basique,problème de dissolution |
| 7 | Rouge pourpre | Jaune orangé | Rouge pourpre | Virage basique moyen |
| 8 | Rouge pourpre | jaune | pourpre | Bons virages |
| 10 | grenadine | orangé | grenadine | Virage acide moyen |
| 12 | rouge | jaune | bleu | Bons virages |
| 15 | rouge/rose | jaune verdâtre | bleu | Bons virages |

Comme il résulte de ce tableau, seuls les colorants 8, 12 et 15 donnent des résultats satisfaisants en terme de changement de couleur, lorsqu'ils sont utilisés seuls.

Des produits conformes à l'invention ont été préparés en mélangeant les colorants indiqués dans le tableau 3 ci-dessous avec le Produit A ayant la composition suivante :
440,1 g de bicarbonate de sodium,
393,4 g de glycine,
83,3 g de NORSOCRYL S35,
83,3 g de NORSOREX APX1,
   et les virages basique et acide ont été vérifiés. Les résultats sont donnés dans le tableau 3 ci-après.

La quantité mentionnée dans ce tableau correspond à la quantité de colorant en mg /g de Produit A.

**Tableau 3**

| **Colorant** | **Quantité** | **HCl 1M** | **neutre** | **NaOH 1M** |
|---|---|---|---|---|
| 1 | 50mg/100g | Verdâtre | | bleuâtre |
| 3 | 40mg/500g | Jaune clair | | Jaune intense |
| 4 | 40mg/80g | gris | | Bleu violet |
| 5 | 62mg/500g | Jaune | rosé | violet |
| 9 | 50mg/50g | grenadine | orangé | grenadine |
| 11 | 3mg/50g | rouge | jaune | bleu |
| 12 | 60mg/50g | Rose | jaune | Bleu très foncé |
| 13 | 24mg/50g | Rose pâle | jaune | Bleu/vert |
| 14 | 20mg/100g | Rose pâle | Jaunâtre/jaune | Vert/jaune puis bleu |

Il résulte du Tableau 3 que seuls les colorants 5, 9 et 11-14 peuvent valablement être utilisés. Les colorants les plus appropriés sont les colorants 11-14.

## Revendications

1. Produit comprenant:
- au moins un amphotère choisi de telle sorte que :
- le pH du résidu obtenu soit dans la plage de 5 à 10, de préférence de 5,5 à 9,7,
- le plus petit des pK acides de l'amphotère soit dans la plage de 5 à 10, de préférence de 5,5 à 9,7, et le plus grand des pK basiques de l'amphotère soit choisi dans la plage de 5 à 10, de préférence de 5 à 8,
- le plus grand des pK basiques de l'amphotère soit inférieur au plus petit des pK acides,
- au moins un absorbant lipophile ,
- au moins un absorbant hydrophile, et
- éventuellement au moins un additif choisi dans le groupe comprenant des agents de charge, des agents de granulation, des agents antistatiques et leurs mélanges,
**caracterisé par** la présence d'au moins un indicateur coloré binaire choisi dans le groupe constitué par les mélanges suivants bleu de Nil/rouge alizarine, jaune alizarine/rouge alizarine, thymolphtaléine/rouge de méthyle, phénolphtaléine/rouge de méthyle et tropaéoline OO/bleu de thymol, et

2. Produit selon la revendication 1, **caractérisé par le fait que** l'indicateur coloré binaire est un mélange thymolphtaléine/rouge de méthyle.

3. Produit selon la revendication 1 ou la revendication 2, **caractérisé par le fait que** l'indicateur binaire est un mélange 75/25 (p/p) à 25/75 (p/p), de préférence 50/50 (p/p).

4. Produit selon l'une quelconque des revendications 1 à 3 , **caractérisé par le fait que** le produit comprend de 0,01‰ à 10‰ en poids d'indicateur, de préférence de 0,05% à 5% et plus préférentiellement encore, de 0,01% à 0,5% en poids.

5. Produit selon l'une quelconque des revendications 1 à 4, **caractérisé par le fait qu'**il comprend au moins deux amphotères dans des proportions telles que le rapport de la somme du nombre de moles des amphotères ayant un pK acide dans la gamme de 5 à 10 et de préférence de 5,5 à 9,7, à la somme du nombre de moles des amphotères ayant un pK basique dans la gamme de 5 à 10, et de préférence de 5 à 8 soit compris entre 0,1 et 10.

6. Produit selon l'une quelconque des revendications 1 à 5, **caractérisé par le fait qu'**il comprend, outre l'indicateur coloré :
- 20 à 60% en poids, de préférence de 15 à 55% en poids, et plus préférentiellement encore de 10 à 45ù en poids d'au moins un amphotère,
- de 2 à 20% en poids, de préférence de 2 à 15% en poids, et plus préférentiellement encore de 1 à 10% en poids, d'au moins un absorbant lipophile,
- de 2 à 20% en poids, de préférence de 2 à 15% en poids, et plus préférentiellement encore de 1 à 10% en poids, d'au moins un absorbant hydrophile,
- de 0 à 5% en poids, de préférence de 0,1 à 1% en poids d'au moins un additif.

7. Produit selon l'une quelconque des revendications 1 à 6, **caractérisé par le fait que** l'amphotère est choisi dans le groupe comprenant les acides aminés tels que la glycine, l'alanine, la sérine, la glutamine, la lysine, l'alanyl alanine, l'histidine, la L-histidylhistidine, l'arginylarginine et leurs mélanges, le bicarbonate de sodium, l'édétate trisodique et le citrate disodique, de préférence la L-histidylhistidine ou l'arginylarginine.

8. Produit selon l'une quelconque des revendications 1 à 7, l'absorbant lipophile qui est un polymère tel que le polyisonorbornène, notamment celui commercialisé sous la dénomination NORSOREX APX1 de la Société ATOCHEM, ou bien encore les produits OIL ABSORBER de la Société SNF FLOERGER, GAMSORB de la Société GAMLEN INDUSTRIES SA, RHON'SEC granulé de la Société TOLSA FRANCE SA, et leurs mélanges, et que l'absorbant hydrophile est choisi dans le groupe comprenant notamment les polymères acryliques tels que NORSOCRYL S35 de la Société ELF ATOCHEM et les produits vendus sous les dénominations AQUALIC^{®} LAW45 de la Société BASF, ASAP 2000 et ASAP 2003 de la Société CHEMDAL LTD., FAVOR Z1030 de la Société STOCKHAUSEN, DRYTECH 4535R de la Société DOW CHEMICALS, AQUASORB 3005K1 de la Société SNF FLOERGER, RHON'SEC granulé de la Société TOLSA FRANCE SA.

9. Produit selon l'une quelconque des revendicaitons 1 à 8, **caractérisé par le fait qu'**il est de couleur blanche à jaune pâle.

10. Produit selon l'une quelconque des revendications 1 à 9, **caractérisé par le fait qu'**il se présente sous la forme d'une poudre, de granules, de comprimés ou de produits conditionnés dans des emballages, notamment constitués de treillis en matière plastique ou en non tissé, de formes et dimensions appropriées de façon à obtenir par exemple des plaques ou des boudins facilitant la mise ne oeuvre du produit.

## Claims

1. A product comprising:
- at least one amphoteric agent chosen such that:
- the pH of the residue obtained is in the range from 5 to 10 and preferably from 5.5 to 9.7,
- the lowest of the acid pKs of the amphoteric agent is in the range from 5 to 10 and preferably from 5.5 to 9.7, and the highest of the basic pKs of the amphoteric agent is chosen in the range from 5 to 10 and preferably from 5 to 8,
- the highest of the basic pKs of the amphoteric agent is lower than the lowest of the acid pKs,
- at least one lipophilic absorbent,
- at least one hydrophilic absorbent, and
- optionally at least one additive chosen from the group comprising fillers, granulating agents and antistatic agents, and mixtures thereof,
**characterized by** the presence of at least one binary colored indicator chosen from the group consisting of the following mixtures: Nil blue/alizarin red, alizarin yellow/alizarin red, thymolphthalein/methyl red, phenolphthalein/methyl red and tropaeolin 00/thymol blue.

2. The product as claimed in claim 1, **characterized in that** the binary colored indicator is a thymolphthalein/methyl red mixture.

3. The product as claimed in claim 1 or claim 2,
**characterized in that** the binary indicator is a 75/25 (w/w) to 25/75 (w/w) and preferably 50/50 (w/w) mixture.

4. The product as claimed in any one of claims 1 to 3, **characterized in that** the product comprises from 0.01‰ to 10‰ by weight, preferably from 0.05‰ to 5‰ and even more preferentially from 0.01‰ to 0.5‰ by weight of indicator.

5. The product as claimed in any one of claims 1 to 4, **characterized in that** it comprises at least two amphoteric agents in proportions such that the ratio of the sum of the number of moles of amphoteric agents with an acid pK in the range from 5 to 10 and preferably from 5.5 to 9.7, to the sum of the number of moles of amphoteric agents with a basic pK in the range from 5 to 10 and preferably from 5 to 8, is between 0.1 and 10.

6. The product as claimed in any one of claims 1 to 5, **characterized in that** it comprises, besides the colored indicator:
- 20% to 60% by weight, preferably from 15% to 55% by weight and even more preferentially from 10% to 45% by weight of at least one amphoteric agent,
- from 2% to 20% by weight, preferably from 2% to 15% by weight and even more preferentially from 1% to 10% by weight of at least one lipophilic absorbent,
- from 2% to 20% by weight, preferably from 2% to 15% by weight and even more preferentially from 1% to 10% by weight of at least one hydrophilic absorbent,
- from 0 to 5% by weight and preferably from 0.1% to 1% by weight of at least one additive.

7. The product as claimed in any one of claims 1 to 6, **characterized in that** the amphoteric agent is chosen from the group comprising amino acids such as glycine, alanine, serine, glutamine, lysine, alanyl alanine, histidine, L-histidylhistidine and arginylarginine, and mixtures thereof, sodium bicarbonate, trisodium edetate and disodium citrate, preferably L-histidylhistidine or arginylarginine.

8. The product as claimed in any one of claims 1 to 7, **characterized in that** the lipophilic absorbent is a polymer, such as polynorbornen, especially the one sold under the names NORSOREX APX1 from ATOCHEM, or the products OIL ABSORBER from SNF FLOERGER, GAMSORB from GAMLEN INDUSTRIES S.A., RHON'SEC granulate from TOLSA FRANCE S.A., and **in that** the hydrophilic absorbent is chosen from the group especially comprising acrylic polymers such as NORSOCRYL S35 from ELF ATOCHEM and the products sold under the names AQUALIC^{®} LAW45 from BASF, ASAP 2000 and ASAP 2003 from CHEMDAL Ltd., FAVOR Z1030 from STOCKHAUSEN, DRYTECH 4535R from DOW CHEMICALS, AQUASORB 3005K1 from SNF FLOERGER, and RHON'SEC granulate from TOLSA FRANCE S.A.

9. The product as claimed in any one of claims 1 to 8, **characterized in that** it is white to pale yellow in color.

10. The product as claimed in any one of claims 1 to 9, **characterized in that** it is in the form of a powder, granules, tablets or products conditioned in packaging, especially consisting of nonwoven or plastic meshes, of suitable shapes and sizes so as to obtain, for example, plates or rolls that facilitate the use of the product.

## Patentansprüche

1. Produkt, umfassend:
- mindestens ein Amphoter, das so gewählt ist, dass:
- der pH-Wert des erhaltenen Rückstands im Bereich von 5 bis 10, vorzugsweise von 5,5 bis 9,7 liegt,
- der niedrigste der sauren pK-Werte des Amphoters im Bereich von 5 bis 10, vorzugsweise von 5,5 bis 9,7 liegt, und der höchste der basischen pK-Werte des Amphoters im Bereich von 5 bis 10, vorzugsweise von 5 bis 8 gewählt ist,
- der niedrigste der basischen pK-Werte des Amphoters niedriger ist als der niedrigste der sauren pK-Werte,
- mindestens ein lipophiles Absorbens,
- mindestens ein hydrophiles Absorbens, und
- gegebenenfalls mindestens ein Additiv, das aus der Gruppe, umfassend Füllstoffe,
Granuliermittel, antistatische Mittel, und ihren Gemischen ausgewählt ist, **gekennzeichnet durch** die Gegenwart von mindestens einem binären Farbindikator, ausgewählt aus der Gruppe, bestehend aus den folgenden Gemischen von Nilblau/Alizarinrot, Alizaringelb/Alizarinrot, Thymolphthalein/Methylrot, Phenolphthalein/Methylrot und Tropaeolin 00/Thymolblau.

2. Produkt nach Anspruch 1, **dadurch gekennzeichnet, dass** der binäre Farbindikator ein Gemisch von Thymolphthalein/Methylrot ist.

3. Produkt nach Anspruch 1 oder Anspruch 2, **dadurch gekennzeichnet, dass** der binäre Farbindikator ein 75/25 (Gew./Gew.) bis 25/75 (Gew./Gew.) vorzugsweise 50/50 (Gew./Gew.) Gemisch ist.

4. Produkt nach einem der Ansprüche 1 bis 3**, dadurch gekennzeichnet, dass** das Produkt 0,01 Gew.-‰ bis 10 Gew.-‰ Indikator, vorzugsweise 0,05 Gew.-%o bis 5 Gew.-%o und noch stärker bevorzugt 0,01 Gew.-%o bis 0,5 Gew.-%o Indikator umfasst.

5. Produkt nach einem der Ansprüche 1 bis 4, **dadurch gekennzeichnet, dass** es mindestens zwei Amphotere in solchen Anteilen enthält, dass das Verhältnis der Summe der Molanzahl der Amphotere mit einem sauren pK-Wert im Bereich von 5 bis 10 und vorzugsweise von 5,5 bis 9,7 zu der Summe der Anzahl von Molen der Amphotere mit einem basischen pK-Wert im Bereich von 5 bis 10 und vorzugsweise von 5 bis 8 zwischen 0,1 und 10 liegt.

6. Produkt nach einem der Ansprüche 1 bis 5, **dadurch gekennzeichnet, dass** es neben dem Farbindikator folgendes umfasst:
- 20 bis 60 Gew.-%, vorzugsweise 15 bis 55 Gew.-% und noch stärker bevorzugt 10 bis 45 Gew.-% von mindestens einem Amphoter,
- 2 bis 20 Gew.-%, vorzugsweise 2 bis 15 Gew.-% und noch stärker bevorzugt 1 bis 10 Gew.-% von mindestens einem lipophilen Absorbens,
- 2 bis 20 Gew.-%, vorzugsweise 2 bis 15 Gew.-% und noch stärker bevorzugt 1 bis 10 Gew.-% von mindestens einem hydrophilen Absorbens,
- 0 bis 5 Gew.-%, vorzugsweise 0,1 bis 1 Gew.-% von mindestens einem Additiv.

7. Produkt nach einem der Ansprüche 1 bis 6, **dadurch gekennzeichnet, dass** das Amphoter aus der Gruppe, umfassend Aminosäuren, wie Glycin, Alanin, Serin, Glutamin, Lysin, Alanylalanin, Histidin, L-Histidylhistidin, Arginylarginin und ihre Gemische, Natriumbicarbonat, Trinatriumedetat, Dinatriumcitrat, vorzugsweise aus L-Histidylhistidin oder Arginylarginin ausgewählt ist.

8. Produkt nach einem der Ansprüche 1 bis 7, wobei das lipophile Absorbens ein Polymer ist, wie Polyisonorbomen, insbesondere dasjenige, das unter der Bezeichnung NORSOREX APX1 von der Firma ATOCHEM im Handel ist, oder auch die Produkte OIL ABSORBER von der Firma SNF FLOERGER, GAMSORB von der Firma Gamlen Industries SA, RHON'SEC-Granulat von der Firma TOLSA FRANCE SA und ihre Gemische, und das hydrophile Absorbens aus der Gruppe ausgewählt ist, die insbesondere acrylische Polymere einschließt, wie NORSOCRYL S35 der Firma ELF ATOCHEM und die unter der Bezeichnung AQUALIC® LAW45 verkauften Produkte der Firma BASF, ASAP 2000 und ASAP 2003 der Firma CHEMDAL Ltd., FAVOR Z 1030 der Firma STOCKHAUSEN, DRYTECH 4535R der Firma DOW CHEMICALS, AQUASORB 3005K1 der Firma SNF FLOERGER, RHON'SEC-Granulat der Firma TOLSA FRANCE SA.

9. Produkt nach einem der Ansprüche 1 bis 8, **dadurch gekennzeichnet, dass** es von weißer bis blassgelber Farbe ist.

10. Produkt nach einem der Ansprüche 1 bis 9, **dadurch gekennzeichnet, dass** es in der Form eines Pulvers, in der Form von Granulat, Tabletten oder in Verpackungen konditionierten Produkten vorliegt, wobei die Verpackungen insbesondere Kunststoff-Geflechte oder nicht gewebte Geflechten von entsprechenden Formen und Dimensionen sind, so dass beispielsweise Platten oder Würste erhalten werden, die die Verwendung des Produkts erleichtern.
